# EUROPEAN PATENT APPLICATION

(11) **EP 3 202 252 A1**
(43) Date of publication of application: **09.08.2017**
(21) Application number: 17382046.5
(22) Date of filing: 02.02.2017
(51) Int. Cl.: A01G 17/14, E04H 17/12, E04H 17/20

(54) **POST FOR VITICULTURE AND FRUIT GROWING**

(30) Priority: 05.02.2016 ES 201630134 U
(71) Applicant: Saez Ortega de Barrax, S.L., 02639 Barrax-Albacete (ES)
(72) Inventor: SAEZ ORTEGA, José Luis, 02639 Barrax-Albacete (ES)
(74) Representative: Urizar Anasagasti, Jesus Maria

(57) **Abstract**

Post for viticulture and fruit growing, made from a metal sheet (1) which is folded longitudinally to form an open or closed profile, in which a series of cutouts in an inverted U shape (2) is defined, which define an intermediate tab (3) which includes an inwardly curved intermediate section (4) which defines a clip or a retention element for the wires or supports arranged between the posts, having envisaged that the profile which said sheet (1) finally takes has longitudinal folds in correspondence with the free extensions of the U-shaped hollows (2) such that said hollows configure throats with dimensions suitable for receiving the wires or supports to be fastened by means of tabs (3), the tabs (3) remaining flush with the main body of the post.

## Description

### Object of the invention

The present invention relates to a post for viticulture and fruit growing, such as those used to provide support for a series of cables or wires which serve as supports for sustaining these types of plants.

The object of the invention is to provide a post with the fastening means for wires which allow for easy, quick, comfortable and safe fastening and extraction of the same.

### Background of the invention

In viticulture and fruit growing, open and closed metal profiles are used which have outer hooks on the flaps thereof configured by perforating, shaping and bending the tabs of the base material.

Closed configuration hooks are known, which are obtained by deforming the material of the post, the difficulty in which lies in extracting the wire from the hooks, such that although insertion is very simple, the extraction thereof becomes quite difficult, given that defined in said hooks is an extremely narrow throat which lacks guide means for the extraction of the wire, making it so that the extraction thereof requires a high degree of expertise.

Documents DE2522054, EP0258157, EP0325531, DE10105830 describe another type of hooks defined by making a cut in one of the faces of the post, forming a window through which the wire engages. These types of hooks do not generally have wire-retention means, making it possible for the wire to come undone at any moment.

Other open configuration hooks define a tab which includes an inwardly curved section which forms a clip or wire-retention element, such that it more easily traps and retains the wire below said clip. However, the problem of the configuration of these hooks lies in the fact that the metal tabs are located above the perforated openings, protruding with respect to the posts themselves, making it so that when fruit harvesting machines are used for harvesting, the shaking rods may push said tabs with a slight inclination towards the perforated openings, closing them such that afterward the wire cannot be inserted. DE1212768, EP1661451, ES1147836, FR2784005 are examples of these types of hooks.

### Description of the invention

The invention proposes a post with open configuration hooks, in which wire easily enters and is trapped by a clip or intermediate retention means, such that it provides a degree of resistance when being extracted from this position, making it necessary to pull the wire towards the open area of the hook until passing said clip, yet allows for an easy insertion and extraction of the wires in the post as many times as needed, all through a simple manufacturing process and without the risk of deterioration due to the impact of the rods of the harvesting machines, since the fastening means are flush with the post itself.

The construction of these types of posts is difficult in that the hooks must be made to be flush with the sides of the post, but also provided with an intermediate section bent towards the inside of the post, which will make way for the clip or wire-retention element. Thus, another objective of the invention is to develop a manufacturing process by means of a specific tool which, after forming the clip or intermediate retention elements, may be used to then shape the plate, creating a side rib in which these hooks may be flush with the profile of the post. In this process, first on a sheet which is as wide as the perimeter of the profile, a plurality of inverted U-shaped cut-outs or hollows is made, the inner space of which is provided with tabs which define hooks for fastening the wires or supports. Before shaping this sheet to the profile of the post, the tabs are formed by curving an intermediate section towards the face of the sheet which will be inside the post, thereby creating a clip or wire-retention element; the sheet subsequently being shaped with grooved rollers which do not deform said hooks, yet which give shape to the sheet creating the desired profile for the post.

The device of the invention is made from an elongated tubular profile, which preferably is open, to simplify the manufacturing process, although it may optionally be closed without affecting the essence of the invention, a profile which includes a series of perforated holes or cuts and folds which define housings for a stable coupling for the wires or supports, as well as for the easy extraction thereof.

More specifically, the perforated holes have an inverted U-shaped configuration for the hollow, by means of which it defines a fastening tab, subjected to a bending process, an inwardly arched section defined in the same, the function of which will be explained below. On the folds of the metal sheet, in a longitudinal direction, specifically in correspondence with the two longitudinal axes of the free extensions of the aforementioned "U", a plurality of housings or throats is defined at different heights as well as in different positions on the horizontal perimeter of the profile. Each one of theses housings has a ramp entrance which facilitates both the insertion and the extraction of the wire, without the need of any type of expertise, the tab itself acting as a stabilizing element immobilizing the wire, thanks to the curved section towards the inside, which acts as an elastic wire-retention element.

Therefore, once the laminar body is bent from the material used for the post, defined in the same, as previously mentioned, is a plurality of holes or throats functioning as hooks in which the fastening tab defined for the same is completely flush with the body of the post, meaning that in no way does it constitute a protruding element, which prevents the direct impact of the rods of the harvesting machine on the tabs during the harvesting of grapes. As a consequence, the integration of the tab in to the shape of the profile of the base body prevents this element from being repeatedly struck by the rods of the harvesting machine.

The device of the invention also leads to a 30% reduction in labor needed since it facilitates the fastening of the wires and the extraction thereof from the tab, without the need for a harvester to move the tab to its original position due to a change in position as a result of an impact.

### Description of the drawings

As a complement to the description provided below, and for the purpose of helping to make the characteristics of the invention more readily understandable, in accordance with a preferred practical embodiment thereof, said description is accompanied by a set of figures, which by way of illustration and not limitation represent the following:
Figure 1. Shows a plan view of a post for viticulture and fruit growing made according to the object of the present invention.
Figure 2. Shows a side elevation view of the items in the previous figure.
Figure 3. Shows a profile view of the items in the previous figures.
Figure 4. Shows a plan view of the device of the invention in an initial phase of production, or the phase starting with a flat rectangular sheet (1) which has first undergone a process of perforation to later undergo a phase of folding to achieve the semi-closed configuration represented in figure 3.
Figure 5. Shows a detailed profile view of the configuration of the hooks for the wires which are on the post.
Figure 6. Shows a plan view of the detail in the previous figure.
Figures 7 and 8. Show both details from opposite perspectives of the post at the level of one of the hooks for the wires or supports which are defined in the same.

### Preferred embodiment of the invention

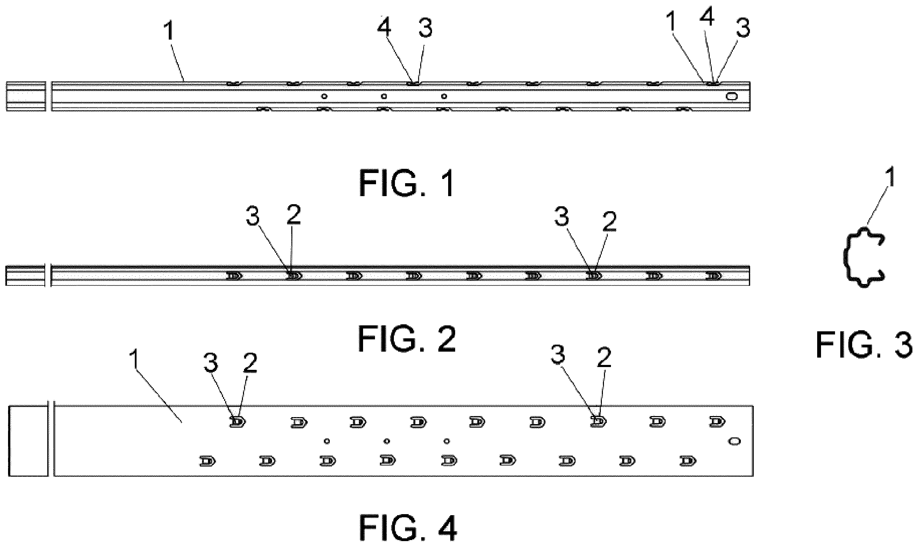

As shown in the figures discussed above, and in particular figure 4, in order to obtain the post of the invention, we begin with a flat, rectangular metal sheet (1) which may have any type of treatment (anti-corrosive, paint, etc.), on which a matrix of cut-outs or hollows in an inverted U-shape (2) is made, which define an intermediate tab (3), forming a hook on which supporting wires for the plants may be fastened, said intermediate tab (3) subjected to a bending process of the same in which an inwardly curved intermediate section (4) is formed.

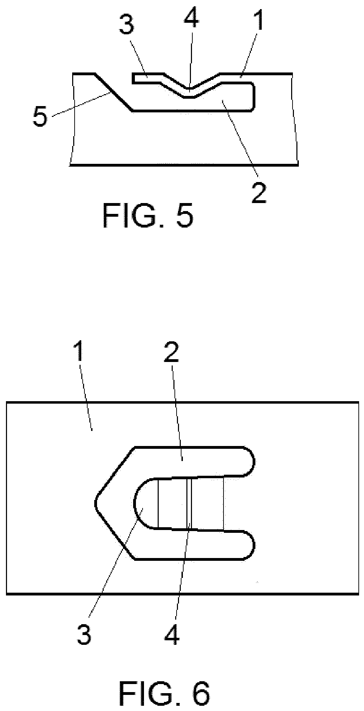

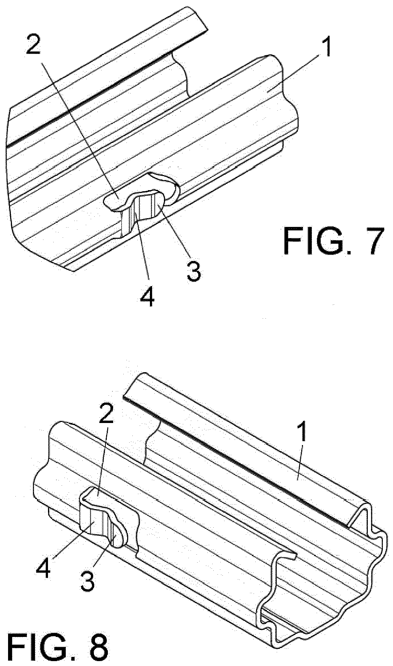

In turn, the sheet (1) is bent around an imaginary longitudinal axis in order to obtain a profile of a semi-closed or omega configuration, as shown in figure 3, which offers a strong mechanical resistance, with the particularity that defined in said fold are folds in correspondence with the free extensions of the U-shaped hollows (2), as can be seen in figures 7 and 8, such that said hollows configure a type of throat into which the wires or supports are inserted, not shown in the figures, the insertion and extraction of which is facilitated by a smooth entrance by means of a ramp (5), while the complete stabilization of the wire is achieved by the arched section (4) of the tab (3) once said section has been passed and by elastic deformation, said tab remaining completely flush with the main body of the post, as shown in figure 5, meaning that the fastening means are integrated in said post, thus avoiding protruding elements that could be struck and therefore possibly become damaged or unusable.

The special configuration of the ramp (5) which is defined in the mouth of the fastening means makes it so the act of extracting and inserting the wires is very easy, since it acts as a guide for the wire, unlike other types of posts with fastening means which are flush with the body of the post, in which although the insertion of the wire is not particularly complicated, without having guide means for the extraction thereof, said extraction is complicated and requires a certain amount of expertise, and given that these types of devices are normally installed on large expanses, a large amount of time must be invested in undoing the wires.

## Claims

1. A post for viticulture and fruit growing of the type which are made from a metal sheet (1) which is folded longitudinally to obtain greater structural rigidity in accordance with different profile designs, and in which a series of conveniently distributed cut-outs is defined in order to determine fastening means for wires or supports which are arranged between the posts, **characterized in that** the fastening means are made from cut-outs or hollows in an inverted U shape (2) which define an intermediate tab (3) which includes an intermediate inwardly curved section (4) which defines a clip or a retention element for the wires, having envisaged that said sheet (1) has longitudinal folds in correspondence with the free extensions of the U-shaped hollows (2) such that said hollows configure throats with dimensions suitable for receiving the wires or supports to be fastened by means of the tabs (3), the tabs (3) remaining flush with the main body of the post.

2. The post for viticulture and fruit growing, according to claim 1, **characterized in that**, in the mouth of the throats established in the fastening means for the wires or supports, ramps (5) are defined which define guide means and facilitate the entrance and extraction of the wires or supports.

3. The post for viticulture and fruit growing, according to claim 1, **characterized in that** the post has an open tubular configuration.

4. The post for viticulture and fruit growing, according to claim 1, **characterized in that** the post has a closed tubular configuration.

5. A manufacturing process for a post for viticulture and fruit growing, of the type which are made from a metal sheet (1), which are shaped to create a post with a continuous profile, which comprises the following phases:
- perforating and shaping a series of conveniently distributed cut-outs (2), which determine fastening means for wires or supports which are arranged between the posts and have an inverted U shape and define an intermediate tab (3), in which in same phase an intermediate inwardly curved section (4) is formed that defines a clip or retention element for wires;
- profile shaping of the sheet (1) by means of grooved rollers which give shape to the sheet providing the desired profile of the post, the grooves of which coincide with the cut-outs (2), the inner tab (3) of which is bent to form a clip, having envisaged that said sheet (1) has longitudinal folds in correspondence with the free extensions of the U-shaped hollows (2) such that said hollows configure throats with dimensions suitable for receiving the wires or supports to be fastened by means of the tabs (3), the tabs (3) remaining flush with the main body of the post.
